# FASCICULE DE BREVET EUROPEEN

(11) **EP 2 879 274 B1**
(45) Date de publication et mention de la délivrance du brevet: **05.01.2022**
(21) Numéro de dépôt: 14199201.6
(22) Date de dépôt: 19.12.2014
(51) Int. Cl.: H02K 1/16

(54) **Machine électrique pour l'entrainement d'un compresseur électrique et compresseur électrique comprenant une telle machine électrique**
Elektromaschine zum Antrieb eines elektrischen Kompressors und elektrischer Kompressor mit einer derartigen elektrischen Maschine
Electric machine for driving an electric compressor and electric compressor comprising such electrical machine

(30) Priorité: 29.11.2013 FR 1361860
(43) Date de publication de la demande: 03.06.2015
(73) Titulaire: Valeo Japan Co., Ltd., Saitama 360-0193 (JP)
(72) Inventeur: Khanchoul, Mohamed, 92160 ANTONY (FR); Guitari, Imed, 78990 ELANCOURT (FR)
(74) Mandataire: Valeo Systèmes Thermiques

(56) Documents cités:
- EP-A1- 2 211 442
- EP-A1- 2 597 754
- WO-A2-02/051660
- WO-A2-2012/016062

## Description

La présente invention concerne une machine électrique, notamment pour l'entrainement d'un compresseur électrique, et un compresseur électrique comprenant une telle machine électrique.

L'invention trouvera en particulier ses applications dans un circuit de fluide réfrigérant équipant un véhicule automobile.

Le fluide réfrigérant est classiquement mis en circulation à l'intérieur d'un circuit de climatisation par l'intermédiaire d'un compresseur. Dans les véhicules équipés d'un moteur à combustion interne, ce compresseur est de type mécanique car sa rotation est entraînée au moyen d'une poulie reliée au moteur à combustion interne par une courroie.

Le nombre de véhicules hybrides, c'est-à-dire à moteur à combustion interne couplé à un moteur électrique, ou tout électrique, c'est-à-dire exclusivement propulsé par un moteur électrique, est en constante augmentation du fait de la raréfaction des énergies fossiles qui alimentent les véhicules équipés de moteur à combustion interne.

L'énergie mécanique fournie habituellement par le moteur à combustion interne est donc moins disponible ou complètement indisponible pour le cas des véhicules tout électriques. Par ailleurs, pour des raisons de rendement global, la solution préférée pour entraîner un compresseur dans un véhicule hybride ou électrique est de l'entraîner par un moteur électrique plutôt que par une courroie en sortie du moteur. Un tel compresseur entraîné par un moteur électrique est dit compresseur électrique.

Ces compresseurs électriques comprennent généralement un mécanisme de compression entrainé par le moteur électrique, et un dispositif de commande du moteur électrique. Le moteur électrique est généralement du type synchrone, à aimants permanents. Ce moteur électrique est de plus logé dans un compartiment dans lequel il peut générer une quantité importante de chaleur en fonctionnement. Il est alors nécessaire de le refroidir.

Il est connu pour cela d'utiliser le fluide réfrigérant du compresseur pour refroidir ce dernier. Une solution étudiée consiste à faire circuler le fluide réfrigérant dans le stator du moteur électrique au niveau de fentes ménagées dans celui-ci pour loger les enroulements statoriques. Cependant, cette circulation du fluide réfrigérant dans le stator peut être source d'une perte de charge importante pour la circulation du fluide du compresseur, notamment dans le cas d'espace résiduel étroit dans les fentes du stator, ce qui est le cas des moteurs électriques synchrones standard. De plus, pour utiliser des moteurs compacts, en raison du faible volume disponible dans le compartiment moteur des véhicules, le rotor est pourvu d'aimants en terre rare, performants mais couteux.

L'invention vise à améliorer la situation et concerne ainsi une machine électrique, notamment pour l'entrainement d'un compresseur électrique, comprenant un rotor et un stator, le rotor étant monté rotatif dans le stator coaxialement à ce dernier et comprenant une pluralité p de paires de pôles magnétiques sous forme d'aimants permanents, le stator étant fixe et comprenant une pluralité s de fentes logeant des enroulements de fil conducteur parcourus par des courants électriques, le nombre s de fentes étant déterminé par l'équation : s =2 p +/- 1 ou s = 2 p +/- 2, p étant un nombre entier positif et s étant un nombre entier positif multiple de trois.

Lesdits courants électriques sont avantageusement des courants triphasés, en particulier des courants sinusoïdaux, d'amplitude équivalente et déphasés de 120° l'un de l'autre.

Il en résulte que relativement à l'architecture standard des machines électriques précitées où s= 3 p, l'architecture de la machine électrique selon l'invention permet une distribution des fentes moins dense dans le stator que celle dans un stator de machine électrique équivalente standard et, donc, elle permet de conformer dans le stator des fentes plus grandes pour le passage d'un fluide de refroidissement du stator, notamment d'un fluide frigorigène dans le cadre de l'entraînement d'un compresseur électrique. Le fonctionnement de la machine électrique et du compresseur électrique sont ainsi améliorés, comme décrit dans le document EP2211442.

De plus, à nombre d'encoches identique, le couple de la machine en mode moteur et sa performance sont améliorés relativement aux moteurs équivalents d'architecture standard. Cette amélioration est réalisée dans une proportion telle à permettre de substituer les aimants en terre rare du rotor par des aimants en ferrite, ceci dans un encombrement et un poids de machine sensiblement équivalents à ceux des machines équivalentes standard.

De préférence, pour des raisons de performance de la machine électrique, p est un nombre entier non multiple de 3.

Selon des caractéristiques de l'invention qui peuvent être prises seules ou en combinaison :
- ledit stator est configuré pour permettre de décaler, notamment vers le haut, une ou des fréquences de résonnance de la machine, en particulier propres à générer du bruit en fonctionnement, de fréquences de régimes de fonctionnement usuels de service de la machine électrique,
- ledit stator comprend une couronne périphérique et des dents séparant lesdites fentes, lesdites dents étant solidaires de la couronne,
- lesdites dents sont identiques l'une à l'autre,
- lesdites dents sont disposées régulièrement suivant une circonférence du stator, notamment en vis-à-vis du rotor,
- lesdites dents sont pourvues d'un corps profilé dans la direction radiale,
- lesdites fentes comportent un fond, la hauteur entre le fond desdites fentes, notamment entre lesdites dents, et la périphérie de ladite couronne de stator étant également déterminée, à un niveau relativement élevé, de préférence sensiblement égale à la hauteur des dents, pour permettre de contenir une masse de matière ferromagnétique apte à écarter, notamment de façon complémentaire aux dents, la fréquence de résonnance de la machine de celles des régimes de fonctionnement usuels de service de la machine, notamment pour un compresseur électrique,
- lesdites fentes sont de forme identique l'une à l'autre,
- ledit fond des fentes comprend deux faces convergentes formant une surface concave, de préférence reliées l'une à l'autre selon un angle compris entre 150 et 170°, ces faces convergentes étant en particulier symétriques l'une de l'autre par rapport à un plan médian radial de la fente,
- ledit stator est en outre configuré pour diminuer les composantes harmoniques de la force électromotrice, notamment l'amplitude de la troisième harmonique de la force électromotrice, en n'affectant pas ou peu la force électromotrice d'entraînement de la machine électrique dans ses régimes de fonctionnement,
- lesdites dents comportent une face inférieure, en vis-à-vis du rotor, ladite face inférieure étant pourvue d'au moins une gorge configurée pour réduire une saturation magnétique du stator et donc réduire les pertes électromagnétiques du stator,
- ladite gorge est rectiligne, de préférence orientée dans une direction parallèle à l'axe de la machine électrique,
- ladite gorge a une section conformée selon au moins une portion arrondie, par exemple en portion de cercle,
- ladite gorge a une section en U, de préférence de fond conformé en surface courbe concave,
- la ou lesdites gorges sont au nombre de deux, de préférence parallèles l'une à l'autre,
- lesdites gorges sont identiques l'une à l'autre,
- lesdites dents sont conformées avec un pied en vis-à-vis du rotor, notamment à une extrémité dudit corps, le pied étant de préférence élargi par rapport audit corps, de chaque côté du corps, notamment selon un plan de symétrie radial médian de la dent,
- lesdites gorges sont disposées sur ladite face inférieure de la dent, notamment la face inférieure dudit pied de la dent,
- lesdites gorges sont disposées sur ladite face inférieure de la dent, notamment la face inférieure dudit pied, en sorte d'être disposées chacune à une distance équivalente de l'extrémité latérale la plus proche de la dent, notamment dudit pied, cette distance étant de préférence supérieure à, notamment égale à environ 4/3 de, la distance de l'une des gorges à l'autre,

Il est à noter que le fonctionnement de la machine électrique s'exerce à celui de moteur électrique et de façon inverse à celui de génératrice électrique.

L'invention concerne aussi un compresseur électrique comprenant une machine électrique telle que définie précédemment.

D'autres caractéristiques, détails et avantages de l'invention ressortiront plus clairement de la description ci-après de modes de réalisation de l'invention en référence aux dessins annexés, dans lesquels :
- la figure 1 est une vue schématique en coupe diamétrale d'une machine électrique selon un mode de réalisation de l'invention,
- la figure 2 illustre graphiquement le rendement d'une telle machine électrique, ainsi que celles des machines standard équivalentes,
- la figure 3 est une demi vue en coupe diamétrale d'une machine électrique selon la figure 1,
- la figure 4 est une vue en coupe agrandie d'une dent de stator d'une machine électrique selon la figure 1,
- La figure 5 est un graphique illustrant la force électromotrice et l'influence de la troisième harmonique dans une machine électrique selon l'invention sans modification du stator, et
- La figure 6 est un graphique illustrant la force électromotrice et l'influence de la troisième harmonique avec une configuration de dent de stator modifiée selon la machine électrique de la figure 1.

Il faut noter que les figures exposent l'invention de manière détaillée, lesdites figures peuvent bien entendu servir à mieux définir l'invention le cas échéant.

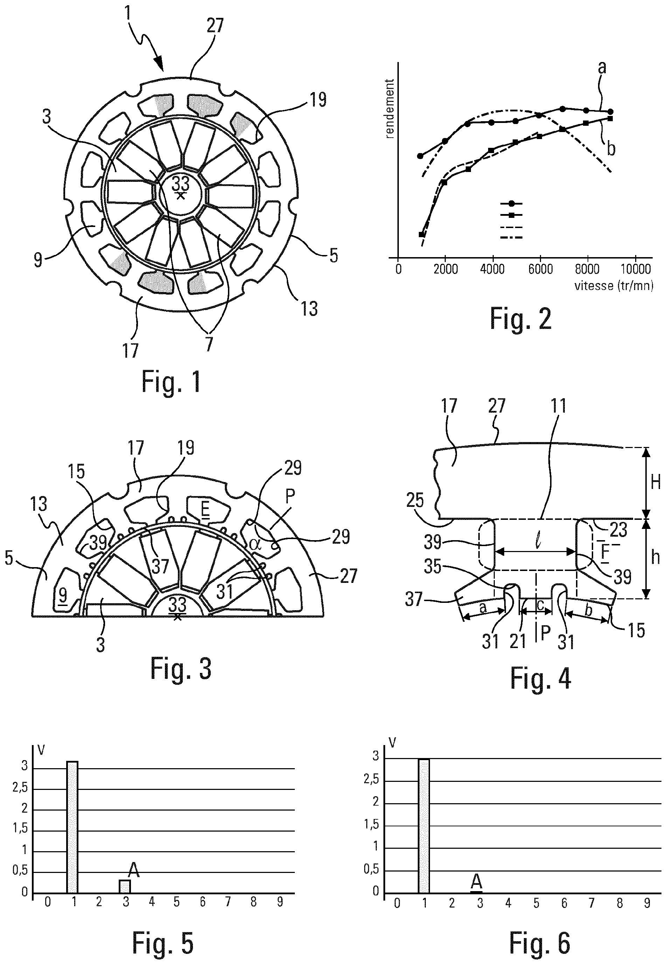

La figure 1 illustre une vue schématique d'une machine électrique 1, notamment pour l'entrainement d'un compresseur électrique, non représenté.

Cette machine électrique 1 comprend un rotor 3 et un stator 5. Le rotor 3 est monté rotatif dans le stator 5 coaxialement à ce dernier et comprend une pluralité p de paires de pôles magnétiques 7 sous forme d'aimants permanents. Le stator 5 est fixe et comprend une pluralité s de fentes 9 logeant des enroulements 11 de fil conducteur, représentés en traits interrompus sur la figure 4, parcourus par des courants électriques.

Selon l'invention, le nombre s de fentes 9 est déterminé par l'équation : s =2 p +/- 1 ou s = 2 p +/- 2, p étant un nombre entier positif désignant le nombre de paires de pôles au rotor et s étant un nombre entier positif multiple de trois désignant le nombre de dents du stator.

Lesdits courants électriques sont avantageusement des courants triphasés, en particulier des courants sinusoïdaux, d'amplitude équivalente et déphasés de 120° l'un de l'autre. Dans le cadre de l'application à l'entrainement d'un compresseur électrique, notamment pour un véhicule, ces courants peuvent être fournis par une source d'alimentation électrique associée au compresseur ou au véhicule, non représentée, tel un onduleur.

Relativement à l'architecture standard des machines électriques où s= 3p, l'architecture de la machine électrique 1 selon l'invention comporte une distribution des fentes 9 moins dense dans le stator 5 que celle dans un stator de machine électrique standard, ce qui permet de ménager des fentes plus grandes pour le passage d'un fluide de refroidissement F du stator, notamment d'un fluide frigorigène dans le cadre de l'entraînement d'un compresseur électrique. Le fonctionnement de la machine électrique est ainsi amélioré, étant mieux refroidie. Il en est de même du compresseur dont la circulation du fluide réfrigérant est ainsi amélioré.

Ici p= 5 et s= 12, soit 2x5 +2 ou 2p +2.

Comme illustré à la figure 2, il est constaté que le couple d'entraînement de la machine en mode moteur et sa performance, voir la courbe a, sont améliorés relativement aux moteurs équivalents d'architecture standard, notamment les machines à 5 paires de pôles au rotor et 15 fentes au stator, tel qu'illustré sur la courbe b . Cette amélioration est sensible puisqu'à un régime de 2000 tours /mn, le rendement de la machine selon l'invention est 3 point plus élevé sur une échelle de 100 que celui de ladite machine standard. Il est alors possible dans la conception de la machine électrique selon l'invention de substituer les aimants en terre rare du rotor que l'on trouve généralement dans les machines standard par des aimants en ferrite, bien moins onéreux, tout en maintenant une performance, un encombrement et un poids de machine sensiblement équivalents à ceux des machines standard.

Avantageusement, comme il est plus particulièrement visible aux figures 3 et 4, le stator 5, plus précisément la culasse 13 du stator comprenant l'ensemble de la masse ferromagnétique du stator, est configuré pour permettre de décaler, en particulier vers le haut ou vers les hautes fréquences, la ou les fréquences de résonnance de la machine et par ce fait permettre d'éloigner la ou lesdites fréquences de résonnance de la machine de la fréquence des régimes de fonctionnement usuels de service de la machine électrique. Ces régimes de fonctionnement varient de environ 800 à 9000 tours/mn.

Par exemple, une fréquence de résonnance d'un mode prédominant, le mode dit « 2 » qui se situe généralement à environ 1067 Hz est élevée à environ 1847 Hz, bien au delà de la fréquence maximale de régime de la machine, soit 750Hz à 9000 tours/mn (à vérifier, repris du mémoire technique).

Ainsi, on évite à la machine de se trouver dans un régime de fonctionnement en service proche d'une fréquence de résonnance de la machine, propre à générer du bruit en fonctionnement et des interférences vibratoires.

Ledit stator 5, plus précisément ladite culasse 13, comprend des dents 15, séparant lesdites fentes 9, et une couronne périphérique 17.

Lesdites dents 15 sont ici constituées en matière ferromagnétique dont la masse est relativement importante, en particulier plus importante que celle des machines électriques équivalentes standard, notamment grâce à la conformation que l'invention leur permet d'avoir, comme cela est développé plus loin.

Ces dents 15, ici identiques l'une à l'autre, sont disposées régulièrement sur une circonférence du stator, notamment avec un faible jeu d'entrefer en vis-à-vis du rotor 3. Ces dents 15 peuvent comporter un corps profilé 19, notamment rectiligne dans la direction radiale.

De même, leur largeur I, notamment au niveau dudit corps 19, est relativement grande, notamment plus grande que celle des dents des machines électriques équivalentes standard. Ceci est en particulier permis par l'invention qui permet d'espacer les fentes 9 entre elles. Ainsi, la masse de matière ferromagnétique des dents exerce une contribution ferromagnétique relativement élevée d'induction sur le rotor.

De plus, la hauteur H entre le fond 25 desdites fentes 9, notamment entre lesdites dents 15, et la périphérie 27 de ladite couronne de culasse de stator est également déterminée à un niveau relativement élevé. Cette hauteur H est de préférence sensiblement égale à la hauteur h des dents, et la couronne 17 contient de ce fait une masse de matière ferromagnétique importante qui contribue également à écarter la ou les fréquences de résonnance de la machine de celles des régimes de fonctionnement usuels de service de la machine, notamment dans l'application à l'entraînement d'un compresseur électrique.

Lesdites fentes 9 sont ici identiques l'une à l'autre. Le fond 25 des fentes peut comprendre deux faces 29 convergentes selon une surface concave. Ces surfaces 29 sont avantageusement orientées selon un angle α compris entre 150 et 170°. Elles sont en particulier symétriques l'une de l'autre par rapport à un plan médian radial P de la fente. Cette conformation des fentes est propice, d'une part pour créer un espace E de logement desdits enroulements conducteurs 11 et d'autre part pour conférer une forte densité massique à la couronne 17.

Ladite culasse 13 est en outre avantageusement configurée pour diminuer les composantes harmoniques de la force électromotrice V, notamment l'amplitude A de la troisième harmonique de la force électromotrice, sans affecter la force électromotrice d'entraînement de la machine électrique, dans ses régimes de fonctionnement en service.

L'amplitude A de la troisième harmonique est normalement telle que représenté à la figure 5, dans un mode de réalisation de l'invention sans modification de la face inférieure des dents comme il sera décrit ci après.

Dans le mode de réalisation optimisé de l'invention selon la figure 1, après modification de la face inférieure 21 des dents, cette amplitude A est réduite à un niveau faible, tel qu'illustré à la figure 6.

Plus précisément, la face inférieure 21 desdites dents, c'est-à-dire la face des dents en vis-à-vis du rotor 3, est pourvue d'au moins une gorge 31 configurée pour réduire une saturation magnétique du stator et donc réduire les pertes électromagnétiques du stator. Il s'ensuit que les pertes électromagnétiques sont réduites et de même le courant électrique parcourant les enroulements 11 de la machine électrique et donnant ainsi une composante continue non nulle au couple à vide dans le cas d'une machine couplée en triangle.

Ladite gorge 31 peut être rectiligne, de préférence orientée dans une direction parallèle à l'axe 33 de la machine électrique. Elle a au moins une section arrondie 35 selon une portion de cercle, par exemple, comme ici, une section en U, de fond 35 conformé en surface courbe concave.

La ou lesdites gorges 31 sont avantageusement au nombre de deux, de préférence parallèles l'une à l'autre, en particulier identiques l'une à l'autre.

Lesdites dents 15 sont de plus conformées avec un pied 37 en vis-à-vis du rotor 3, notamment à une extrémité 21 dudit corps. Le pied 37 est de préférence élargi par rapport audit corps 19, de chaque côté du corps 19, notamment selon un plan de symétrie radial médian P de la dent.

Lesdites gorges 31 sont disposées sur ladite face inférieure 21 de la dent, notamment la face inférieure dudit pied 37 de la dent, en sorte d'être inscrites à l'intérieur des plans de projection des faces latérales 39 opposées dudit corps sur ladite face inférieure 21 de la dent. Ces gorges 31 peuvent être disposées chacune à une distance équivalente a et b de l'extrémité latérale la plus proche de la dent, notamment dudit pied. Cette distance a ou b est égale avantageusement à 4/3 de la distance c de l'une des gorges à l'autre, autrement dit a=b=(4/3).c. Comme déjà dit, cette configuration permet de réduire la saturation magnétique du stator et donc de réduire les pertes électromagnétiques du stator et par suite de réduire les courants de circulation qui sont dues à l'harmonique 3 de la force électromotrice

La machine électrique a été décrite dans un fonctionnement en tant que moteur. Le fonctionnement de la machine en génératrice électrique est inverse du fonctionnement en moteur. Les courants électriques sont produits dans les enroulements du stator lors de la rotation du rotor.

L'invention apporte ainsi une machine électrique, notamment pour l'entrainement d'un compresseur électrique, qui est simple, performante, silencieuse et peu onéreuse.

## Revendications

1. Machine électrique (1) comprenant un rotor (3) et un stator (5), le rotor (3) étant monté rotatif dans le stator (5) coaxialement à ce dernier et comprenant une pluralité p de paires de pôles magnétiques (7) sous forme d'aimants permanents, le stator (5) étant fixe et comprenant une pluralité s de fentes (9) logeant des enroulements (11) de fil conducteur parcourus par des courants électriques, le nombre s de fentes (9) étant déterminé par l'équation : s =2 p +/- 1 ou s = 2 p +/- 2, tel que s est un entier positif multiple de trois, p étant un nombre entier positif, dans laquelle ledit stator (5) est configuré pour diminuer l'amplitude A de la troisième harmonique de la force électromotrice, et dans lequel ledit stator (5) comprend des dents (15) séparant lesdites fentes (9) et **caractérisé en ce que** lesdites dents (15) comportent une face inférieure (21), en vis à vis du rotor, ladite face intérieure (21) étant pourvue d'au moins une gorge (31) configurée pour réduire une saturation magnétique du stator et donc réduire les pertes électromagnétiques du stator.

2. Machine électrique (1) selon la revendication 1, dans laquelle lesdits aimants sont des aimants en ferrite.

3. Machine électrique (1) selon l'une quelconque des revendications précédentes, dans laquelle ledit stator (5) présente une culasse (13) comprenant l'ensemble de la masse ferromagnétique dudit stator (5), de sorte que ledit stator (5) est configuré pour permettre de décaler une ou des fréquences de résonnance de la machine de fréquences de régimes de fonctionnement usuels de service de la machine.

4. Machine électrique (1) selon l'une quelconque des revendications précédentes, dans laquelle ledit stator (5) comprend une couronne périphérique (17), lesdites dents (15) étant solidaires de ladite couronne (17).

5. Machine électrique (1) selon la revendication précédente, dans laquelle lesdites fentes (9) comprennent un fond (25), la hauteur H entre le fond (25) desdites fentes (9) et la périphérie (27) de ladite couronne (17) de stator étant sensiblement égale à la hauteur h desdites dents (15).

6. Machine électrique (1) selon la revendication précédente, dans laquelle ledit fond (25) des fentes (9) comprend deux faces (29) convergentes suivant une surface concave.

7. Machine électrique (1) selon l'une quelconque des revendications précédentes, dans laquelle ledit stator (5) est configuré pour diminuer les composantes harmoniques A de la force électromotrice en n'affectant pas ou peu la force électromotrice d'entraînement de la machine électrique dans ses régimes de fonctionnement.

8. Machine électrique (1) selon la revendication précédente, dans laquelle ladite gorge (31) est rectiligne, orientée dans une direction parallèle à l'axe (33) de la machine électrique, et comprend une section conformée selon au moins une portion arrondie (35).

9. Machine électrique (1) selon la revendication 8 ou 9, dans laquelle ladite gorge (31) a une section en U, de fond (35) conformé en surface courbe concave.

10. Machine électrique (1) selon l'une quelconque des revendications 8 à 10, dans laquelle la ou lesdites gorges (31) sont au nombre de deux, parallèles l'une à l'autre, lesdites gorges (31) étant identiques l'une à l'autre.

11. Machine électrique (1) selon la revendication précédente, dans laquelle lesdites gorges (31) sont disposées sur ladite face inférieure (21) de la dent, en sorte d'être disposées chacune à une distance a, b équivalente de l'extrémité latérale la plus proche de la dent, cette distance étant supérieure à environ à 4/3 de la distance c de l'une des gorges (31) à l'autre.

12. Compresseur électrique comprenant une machine électrique (1) selon l'une quelconque des revendications précédentes.

13. Compresseur électrique selon la revendication précédente, le compresseur comprenant un fluide de refroidissement F passant dans un stator (5) de la machine électrique.

## Patentansprüche

1. Elektrische Maschine (1), die einen Rotor (3) und einen Stator (5) enthält, wobei der Rotor (3) drehbar in den Stator (5) koaxial zu diesem letzteren montiert ist und eine Vielzahl p von Paaren von Magnetpolen (7) in Form von Permanentmagneten enthält, wobei der Stator (5) ortsfest ist und eine Vielzahl s von Schlitzen (9) enthält, in denen von elektrischen Strömen durchflossene Leitungsdraht-Wicklungen (11) untergebracht sind, wobei die Anzahl s von Schlitzen (9) durch die Gleichung:
s = 2p +/- 1 oder s = 2p +/- 2 bestimmt wird, derart, dass s eine positive ganze Zahl ein Vielfaches von drei ist, p eine positive ganze Zahl ist, wobei der Stator (5) konfiguriert ist, die Amplitude A der dritten Harmonischen der elektromotorischen Kraft zu verringern, und wobei der Stator (5) Zähne (15) enthält, die die Schlitze (9) trennen, und **dadurch gekennzeichnet, dass** die Zähne (15) eine Unterseite (21) gegenüber dem Rotor aufweisen, wobei die Unterseite (21) mit mindestens einer Rille (31) versehen ist, die konfiguriert ist, eine magnetische Sättigung des Stators zu reduzieren und somit die elektromagnetischen Verluste des Stators zu reduzieren.

2. Elektrische Maschine (1) nach Anspruch 1, wobei die Magnete Ferritmagnete sind.

3. Elektrische Maschine (1) nach einem der vorhergehenden Ansprüche, wobei der Stator (5) ein Joch (13) aufweist, das die Gesamtheit der ferromagnetischen Masse des Stators (5) enthält, so dass der Stator (5) konfiguriert ist, die Verschiebung einer Resonanzfrequenz oder von Resonanzfrequenzen der Maschine von Frequenzen üblicher Dienstbetriebszustände der Maschine zu erlauben.

4. Elektrische Maschine (1) nach einem der vorhergehenden Ansprüche, wobei der Stator (5) einen Umfangskranz (17) enthält, wobei die Zähne (15) fest mit dem Kranz (17) verbunden sind.

5. Elektrische Maschine (1) nach dem vorhergehenden Anspruch, wobei die Schlitze (9) einen Boden (25) enthalten, wobei die Höhe H zwischen dem Boden (25) der Schlitze (9) und dem Umfang (27) des Statorkranzes (17) im Wesentlichen gleich der Höhe h der Zähne (15) ist.

6. Elektrische Maschine (1) nach dem vorhergehenden Anspruch, wobei der Boden (25) der Schlitze (9) zwei gemäß einer konkaven Fläche konvergierende Seiten (29) enthält.

7. Elektrische Maschine (1) nach einem der vorhergehenden Ansprüche, wobei der Stator (5) konfiguriert ist, die harmonischen Komponenten A der elektromotorischen Kraft zu verringern, indem er die elektromotorische Antriebskraft der elektrischen Maschine in ihren Betriebszuständen nicht oder wenig beeinflusst.

8. Elektrische Maschine (1) nach dem vorhergehenden Anspruch, wobei die Rille (31) geradlinig, in einer Richtung parallel zur Achse (33) der elektrischen Maschine ausgerichtet ist und einen Querschnitt enthält, der gemäß mindestens einem abgerundeten Abschnitt (35) gestaltet ist.

9. Elektrische Maschine (1) nach Anspruch 8 oder 9, wobei die Rille (31) einen U-förmigen Querschnitt hat, mit einem Boden (35) in einer konkaven gekrümmten Fläche gestaltet.

10. Elektrische Maschine (1) nach einem der Ansprüche 8 bis 10, wobei die Rille oder die Rillen (31) mindestens zwei sind, parallel zueinander, wobei die Rillen (31) einander gleich sind.

11. Elektrische Maschine (1) nach dem vorhergehenden Anspruch, wobei die Rillen (31) an der Unterseite (21) des Zahns so angeordnet sind, dass sie je in einem gleichen Abstand a, b zum nächstliegenden seitlichen Ende des Zahns angeordnet sind, wobei dieser Abstand größer ist als etwa 4/3 des Abstands c von einer der Rillen (31) zur anderen.

12. Elektrischer Kompressor, der eine elektrische Maschine (1) nach einem der vorhergehenden Ansprüche enthält.

13. Elektrischer Kompressor nach dem vorhergehenden Anspruch, wobei der Kompressor ein Kühlfluid F enthält, das durch einen Stator (5) der elektrischen Maschine geht.

## Claims

1. Electrical machine (1) comprising a rotor (3) and a stator (5), the rotor (3) being mounted to rotate in the stator (5) coaxially thereto and comprising a plurality p of pairs of magnetic poles (7) in the form of permanent magnets, the stator (5) being fixed and comprising a plurality s of slits (9) housing windings (11) of conductors that are passed through by electrical currents, the numbers s of slits (9) being determined by the equation: s = 2 p +/- 1 or s = 2 p +/- 2, such that s is a positive integer that is a multiple of three, p being a positive integer number, wherein said stator (5) is configured to reduce the amplitude A of the third harmonic of electromotive force, and wherein said stator (5) comprises teeth (15) separating said slits (9) and **characterized in that** said teeth (15) have a bottom face (21), facing the rotor, said bottom face (21) being provided with at least one groove (31) configured to reduce a magnetic saturation of the stator and therefore reduce the electromagnetic losses of the stator.

2. Electrical machine (1) according to Claim 1, wherein said magnets are ferrite magnets.

3. Electrical machine (1) according to either one of the preceding claims, wherein said stator (5) has a yoke frame (13) comprising all of the ferromagnetic mass of said stator (5), such that said stator (5) is configured to make it possible to shift one or more of the resonance frequencies of the machine by frequencies of standard service operating speeds of the machine.

4. Electrical machine (1) according to any one of the preceding claims, wherein said stator (5) comprises a peripheral crown ring (17), said teeth (15) being secured to said crown ring (17).

5. Electrical machine (1) according to the preceding claim, wherein said slits (9) comprise a bottom (25), the height H between the bottom (25) of said slits (9) and the periphery (27) of said stator crown ring (17) being substantially equal to the height h of said teeth (15).

6. Electrical machine (1) according to the preceding claim, wherein the said bottom (25) of the slits (9) comprises two faces (29) converging along a concave surface.

7. Electrical machine (1) according to any one of the preceding claims, wherein the said stator (5) is configured to reduce the harmonic components A of the electromotive force that have little or no effect on the electromotive force driving the electrical machine in its operating speeds.

8. Electrical machine (1) according to the preceding claim, wherein said groove (31) is rectilinear, oriented in a direction parallel to the axis (33) of the electrical machine, and includes a section shaped according to at least one rounded portion (35) .

9. Electrical machine (1) according to Claim 8 or 9, wherein the said groove (31) has a U-shaped section, with the bottom (35) shaped as a concave curved surface.

10. Electrical machine (1) according to any one of Claims 8 to 10, wherein there are two of said groove or grooves (31), parallel to one another, said grooves (31) being identical to one another.

11. Electrical machine (1) according to the preceding claim, wherein said grooves (31) are positioned on said bottom face (21) of the tooth so as to each be positioned at an equivalent distance a, b from the closest lateral end of the tooth, this distance being greater than approximately 4/3 of the distance c from one of the grooves (31) to the other.

12. Electrical compressor comprising an electrical machine (1) according to any one of the preceding claims.

13. Electrical compressor according to the preceding claim, the compressor comprising a coolant F running in a stator (5) of the electrical machine.
